# EUROPÄISCHE PATENTANMELDUNG

(11) **EP 0 561 310 A1**
(43) Veröffentlichungstag der Anmeldung: **22.09.1993**
(21) Anmeldenummer: 93104106.5
(22) Anmeldetag: 13.03.1993
(51) Int. Cl.: B29C 51/08

(54) **Werkzeuge zur Kaltverformung von Kunststoff-Folien, speziell von Polypropylenfolien unterschiedlicher Dicken**

(30) Priorität: 18.03.1992 DE 4208642
(71) Anmelder: Dr. Karl Thomae GmbH, D-88397 Biberach (DE)
(72) Erfinder: Eggert, Heinrich, Dipl.-Ing., W-7931 Oberstadion (DE); Schwartz, Hans, W-7951 Warthausen (DE); Müller, Matthäus, W-7951 Tannheim (DE)

(57) **Zusammenfassung**

Beschrieben werden Werkzeuge zur Kaltverformung von Kunststoff-Folien oder Blattmetallfolien, insbesondere von Polypropylenfolien, ohne vorhergehende Wärmebehandlung. Die Werkzeuge bestehen aus einem Verformungstempel (1) mit Entlüftungsbohrung und einer dazupassenden Lochmatrize (4).

## Beschreibung

Die Erfindung betrifft Werkzeuge zur Kaltverformung von Kunststoff-Folien oder Blattmetallfolien, insbesondere von Polypropylenfolien unterschiedlicher Dicken, bestehend aus einem Verformungsstempel mit Entlüftungsbohrung und einer Lochmatrize.

Polypropylenfolien werden heutzutage thermisch wie kalt verformt unter Zuhilfenahme von Druckluft bzw. Vakuum. In besonders schwierigen Anwendungsbereichen wird mit sogenannten Vorstreck- bzw. Vorreckstempeln gearbeitet.

All diese Anwendungen führen dazu, daß die zu verformende Polypropylen-Folie durch thermische Einwirkung zum Schrumpfen bzw. Dehnen der genannten Folie führt.

Stempel, welche beheizt sind und zur Verformung von Polypropylenfolien benutzt werden, bewirken, daß der Formling aus Polypropylen zur Faltenbildung neigt, vor allem wenn der Formling im warmen Zustand von der Matrize oder Formstempel abgezogen wird.

In der DE-A-1 704 303 (entspricht der U.S. Patentschrift Nr. 3,546,221) wird ein Verfahren zum Herstellen von Erzeugnissen aus thermoplastischem Material beschrieben. Die Verformung geschieht bei Arbeitstemperaturen die unter der normalen Warmverformungstemperatur liegen. Dieses Verfahren bedient sich zweier Verformungsmatrizen, wobei eine Verformungsmatrize ein elastisches Element aus z. B. Gummi enthält, in welches mit Hilfe einer Gegenmatrize das zu verformende Folienstück eingepreßt wird. Die Verformungsmatrize mit dem elastischen Element weist einen durch dieses Element gehenden Kanal zur Verhinderung eines Unterdruckes, nach dem das Erzeugnis geformt worden ist, auf. Das elastische Element dieser Matrize dient als Gegenform zum Verformungsstempel der Gegenmatrize. Dieser Verformungsstempel ist im Zentrum mit einem pneumatisch angesteuerten Auswerfer versehen. Nach Öffnen der Werkzeuge wird der Formling durch den Auswerfer entfernt.

Es wurde nun gefunden, daß Folien aus Polypropylen oder Blattmetallen, auch bei Raumtemperatur, also ohne vorhergehendes Anwärmen des Materials, ohne Benutzung eines Gegenstempels durch Druck in vielfältiger Weise verformt werden können, wenn ein Stempel mit einer zentralen Bohrung, dessen Innenhohlraum nach außen mit einer oder mehreren Querbohrungen verbunden ist, mit einer Lochmatrize, deren Bohrungsdurchmesser an den Außendurchmesser des Stempels angepaßt ist, im Eingriff steht. Der Innenhohlraum in Verbindung mit den Querbohrungen garantiert während des gesamten Preßvorganges einen stetigen Durckausgleich mit der Umgebung. Durch das Vorhandensein des belüfteten Innenholraumes im Stempel und durch die Verwendung einer Lochmatrize treten während des Preßvorganges am Preßling keine Druckunterschiede auf. Beim Abstreifen des Formlings vom Formstempel entsteht kein auf den Formling deformierend wirkender Sog.

Die Erfindung bezieht sich demnach auf einen Formstempel mit dazupassender Lochmatrize zur Verformung von Kunststoff-Folien, insbesondere Polypropylenfolien, sowie von Blattmetall-Folien in kaltem Zustand, ohne daß ein Rückschrumpfen des tiefgezogenen Formlings beim Abziehen des Formstempels erfolgt.

Beim Verformungsvorgang genügt es, wenn ein Verformungselement (z. B. die Lochmatrize), gegen das andere (z. B. den Formstempel) bewegt wird. Es ist aber von Vorteil, wenn die Lochmatrize gegen den Formstempel bewegt wird, da an der Lochmatrize Befestigungselemente zur Fixierung der Lauffolien besser angebracht werden können.

Zur besseren Erläuterung des Gegenstands der Erfindung sei auf die Figuren I bis X verwiesen.

Die Figuren I bis IV zeigen einen Querschnitt durch die Preßwerkzeuge vor, während und nach der Verformung zu einem runden Formling gemäß Figur IX, wobei durch Figur IV nur der Stempel mit Dorn dargestellt ist.

Die Figuren V und VII zeigen den Längsschnitt, während die Figuren VI und VIII den Querschnitt durch die Preßwerkzeuge vor, während und nach der Verformung eines länglichen bzw. ovalen Formlings gemäß Figur X zeigen.

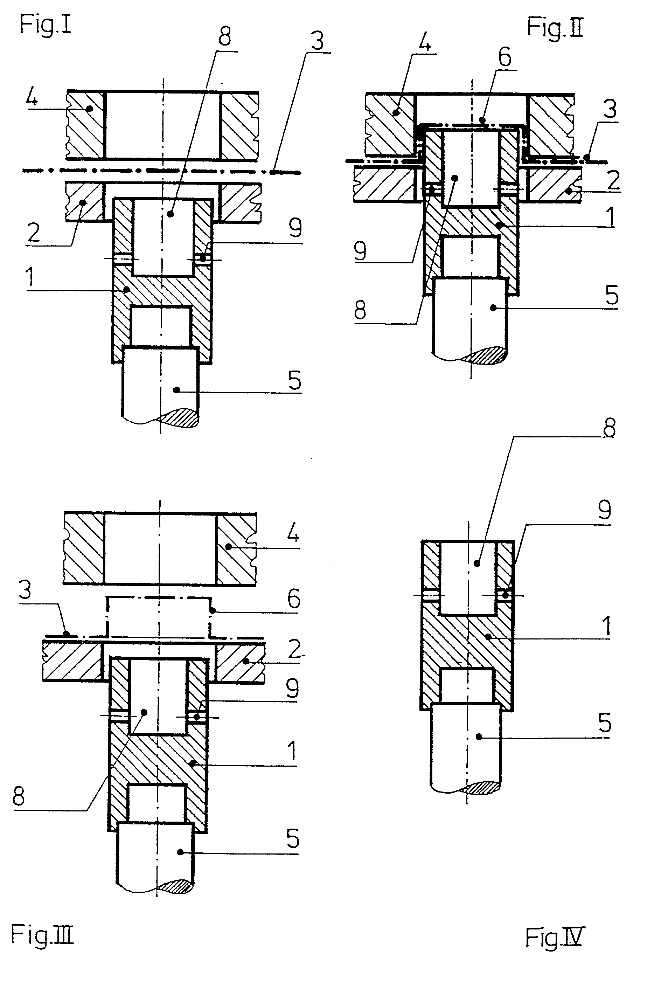

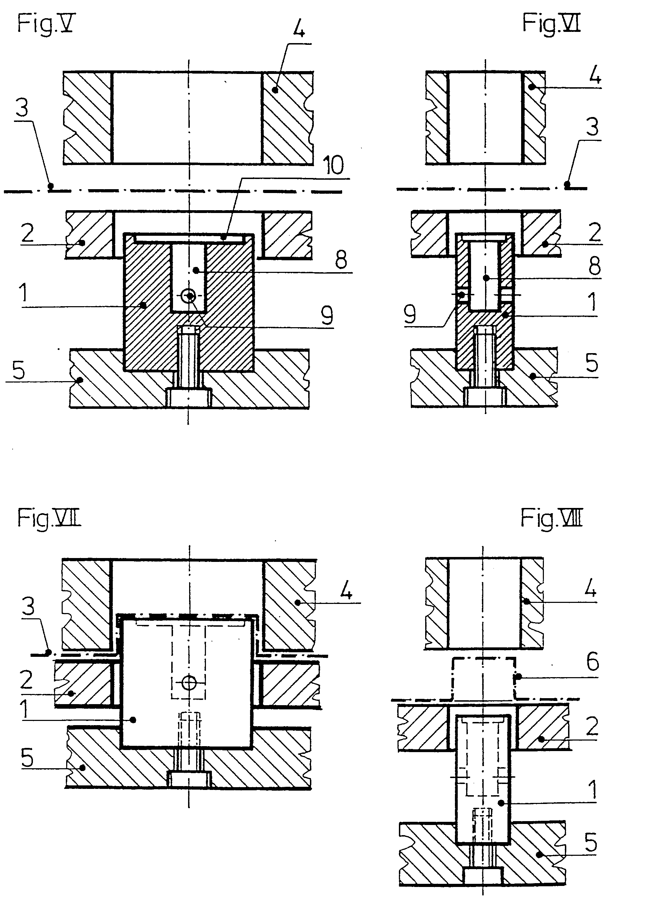

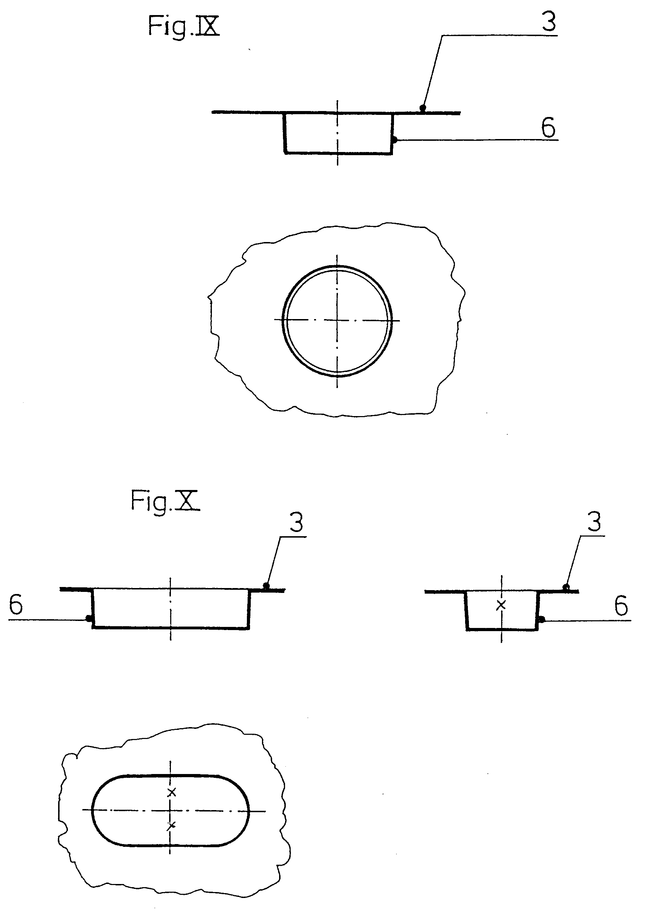

Die Figur I stellt die Ausgangssituation bei geöffnetem Werkzeug dar, bevor eine zu verformende Polypropylenfolie [3] mit dem Formstempel [1] tiefgezogen ist. In der Figur I ist [2] ein Niederhalter der zur Fixierung der Folie an der Lochmatrize dient, [3] ist die zu verformende Folie und [4] die an den Stempel [1] angepaßte Lochmatrize, [5] ist der Aufnahmedorn für den Formstempel [1].

Figur II zeigt den geschlossenen Zustand des Werkzeuges im Schnitt, wobei der Formstempel [1] über die Folie [3], die vom Niederhalter [2] auf der Lochmatrize [4] festgeklemmt ist, bereits in die Lochmatrize [4] eingefahren ist.

Figur III verdeutlicht einen ausgeformten Formling [6] bei geöffnetem Werkzeug.

Die Figur IV zeigt den Verformungsstempel [1] im Schnitt, der zentrisch eine Entlüftungsbohrung [8] und Querbohrungen [9], die zum sicheren Ausgleich des atmosphärischen Druckes dienen, aufweist.

Die Figuren V und VI zeigen im Längs- und Querschnitt eine Stempelform [1] in länglicher Ausführung, wie sie zur Herstellung eines Formlings nach Figur X erforderlich ist, z. B. zur sicheren Unterbringung einer Kapsel und dergleichen in einem ovalen Napf. In Figur V bzw. Figur VI ist [10] zusätzlich ein Freiraum zur Vermeidung von Adhäsionen bei der ovalen Formgebung, wodurch ein atmosphärischer Druckausgleich gewährleistet wird, und [8] die zentrale Entlüftungsbohrung, in die die Querbohrung [9] für den freien Luftaustritt mündet.

In der durch die Figur VII dargestellten Vorderansicht ist der Formstempel [1] in die Lochmatrize [4] eingefahren. Während des Verformungsvorganges ist die Polypropylen-Folie [3] zwischen die Lochmatrize [4] und den Niederhalter [2] eingespannt. Der Verformungsstempel [1] ist auswechselbar im Aufnahmedorn [5] festgeschraubt.

Durch Figur VIII wird die Seitenansicht des geöffneten Werkzeuges gezeigt, wobei [6] der kaltverformte Formling (z. B. ein Blisternapf) ist. Die Lochmatrize [4] ist bereits wieder in der Ausgangsposition.

In Figur IX ist ein runder Napf [6] dargestellt, wobei [3] die Polypropylen-Folie darstellt.

Durch Figur X wird ein Napf [6] in Vorder- und Seitenansicht dargestellt, der aus der Planfolie [3] kalt herausgezogen wurde, wie dies aus der Draufsicht hervorgeht. Der Ablauf des Verformungsvorganges dieses länglichen Napfes ist durch die Figuren VII und VIII aufgezeigt.

Bei der Kaltverformung wird zunächst eine Folie [3] zwischen Niederhalter [2] und Lochmatrize [4] eingefahren. Der Niederhalter [2] ist so hochgezogen, daß die Folie [3] über dem Formstempel [1] liegt. Die Verformung tritt dadurch ein, daß die Lochmatrize [4] auf den Niederhalter [2] drückt und beide Elemente mit der gespannten Folie [3] über den Formstempel [1] gleiten, vorzugsweise mit reduzierter Geschwindigkeit. Der hierbei gebildete Formling [6] wird dadurch befreit, daß die Lochmatrize [4] und der Niederhalter [2] vom Formstempel [1] zurückgezogen werden, und zwar die Lochmatrize in einem größeren Ausmaß, so daß der auf dem Niederhalter aufliegende Formling freiliegt und damit seitwärts zwischen Niederhalter und Lochmatrize abgezogen werden kann.

## Patentansprüche

1. Werkzeuge zur Kaltverformung von Kunststoff-Folien, insbesondere Polypropylenfolien oder Blattmetallfolien, ohne Vorwärmung bestehend aus einem Formstempel [1], dadurch gekennzeichnet, daß der Formstempel [1] einen Innenhohlraum [8], der mit einer oder mehreren Querbohrungen [9] mit der Außenatmosphäre in Verbindung steht, aufweist und mit einer Lochmatrize [4], deren Bohrungsdurchmesser an den Außendurchmesser des Stempels angepaßt ist, im Eingriff steht.

2. Werkzeuge zur Kaltverformung gemäß Anspruch 1, dadurch gekennzeichnet, daß die zu verformende Folie [3] durch einen Niederhalter [2] fixiert wird.

3. Werkzeuge zur Kaltverformung gemäß Anspruch 1 und 2, dadurch gekennzeichnet, daß die Lochmatrize [4] und der Niederhalter [2] in Richtung Formstempel [1] beweglich angeordnet sind.

4. Verfahren zur Kaltverformung von Kunststoff-Folien, insbesondere Polypropylen-Folien oder Blattmetallfolien, ohne Vorwärmung, dadurch gekennzeichnet, daß die zu verformende Folie [3] zwischen einer Lochmatrize [4] und einem Niederhalter [2] eingefahren wird, wobei anschließend die Lochmatrize [4] zusammen mit dem Niederhalter [2] in Richtung eines Formstempels [1] mit Innenhohlraum [8] und Querbohrungen [9] gedrückt und damit die Formgebung durchgeführt wird, hernach die Lochmatrize [4] wieder zurückgezogen und der Niederhalter [2] soweit zurückgefahren wird, daß der Formling [6] hierbei vom Formstempel [1] frei abgezogen werden kann.
